Europäisches Patentamt

European Patent Office

Office européen des brevets

(11) Publication number: **0 134 566**
A2

# EUROPEAN PATENT APPLICATION

(21) Application number: **84109844.5**

(22) Date of filing: **17.08.84**

(51) Int. Cl.⁴: **F 16 L 13/14**

(30) Priority: **29.08.83 NO 833090**

(43) Date of publication of application:
**20.03.85 Bulletin 85/12**

(84) Designated Contracting States:
**AT BE CH DE FR GB IT LI NL SE**

(71) Applicant: **NORSK HYDRO A/S**
**Bygdoy Allé 2**
**N-Oslo 2(NO)**

(72) Inventor: **Clausen, Edvin List**
**Kogsvn. 10**
**DK-6270 Tonder(DK)**

(74) Representative: **WILHELMS & KILIAN Patentanwälte**
**Eduard-Schmid-Strasse 2**
**D-8000 München 90(DE)**

(54) **Method for permanent joining of tubular members.**

(57) A method for permanent connection of cylindrical members is disclosed. An inner member (1) is placed in the end of an outer member (3) and this outer member is exposed to a radial, shearing deformation in the connecting zone under formation of discrete ring shaped grooves (4). The groove's bottom part protrudes down to the inner member wall and develops plastic deformation of this wall.

Fig. 4

Croydon Printing Company Ltd

PATENTANWALTE

EUROPEAN PATENT ATTORNEYS    EUROPAISCHE PATENTVERTRE...

**0134566**

NORSK HYDRO a.s.

Oslo / Norwegen

- A -

DR. ... F ...ELM'S
DR. HE... ...

... ...
8000 MUNCHE... ...

TELEFON ...
TELEX ...
TELEGRAMM ...
TELECOPIER ...

---

Menthod for permanent joining of tubular
members

---

Priority: Aug. 29, 1983 - Norway - No. 833090

P 1922-EP

The present invention relates to a method for permanent
joining of tubular members and more especially joining of
aluminium or copper tubes.

Implementation of such tubes is nowadays increasing for many
applications, e.g. in the car industry, in cooling/freeze
technology, in heating circuits etc. as substitute for steel
tubes. Heavy demands are made with regard to a reliable,
leakproof tube connection for these applications. The most
common joining method applied on steel and copper tubes is
brazing/soldering, which represents a rather simple joining.
Soldering of aluminium is, however, a substantially more complicated method because of the metal's affinity to oxygen,
which makes the use of flux necessary, or possibly inert
atmosphere and represents a danger of corrosion problems in
the connection.

Mechanical join muff couplings, which have recently emerged
on the market, can be applied on Al-tubes. The main drawback
connected with these muffs is the price, which cannot compete
with brazed steel and copper materials. In principle these
mechanical couplings apply a specially manufactured lock device (sleeve ring) with truncated inner cone surface which is
inserted over an outer element having an inner element placed
in its anular region. A gradual deformation of the outer and
inner element takes place when the outer element is forced
down by the lock ring to provide a grip with the inner
element.

0134566

UK Patent Application GB 2.090.930 discloses a connector for reparation of hydraulic tube lines comprising a tubular sleeve member being crimped into firm engagement with a tube member. Additional means are provided to constitute a seal between the tube member and the sleeve member (adhesives). Furthermore, a crimping tool is disclosed which incorporates two opposed crimping plates which present arcuate crimping surfaces covering substantially the entire periphery of the tubular member. One of the crimping plates is movable in response to the actuation of an attached hydraulic ram so that the outer sleeve is deformed and brought into contact with the entire periphery of the inner tube, which will be slightly plastically deformed.

The main shortcoming of the disclosed connection is the so-called spring-back effect which unavoidably arises between the tubular sleeve member and the tube member(s) as a direct result of the applied crimping tool/method. Once the arcuate crimping plates loose their grip around the entire periphery of the tubular member after the hydraulic or pneumatic pressure has ceased, the accumulated material tension in the tube(s) tends to be released, which results in relaxation of the outer crimped sleeve member so that its firm contact with the underlying tubes is not maintained. As a result of this spring-back effect it is in practice impossible to achieve a reliable, leakproof connection between the members solely by means of the crimping connection. Additional means like the disclosed anaerobic adhesives in GB 2.090.930 or the glue connection as disclosed in GB 2.090.932 in combination with a radial deformation of an outer tube, have to be applied in order to ensure and secure an adequate leakproof connection.

It is an object of the present invention to provide a simple direct joining method for connecting elements based exclusively on a resilient radial friction pressure constituting a seal between the connected elements without applying any special lock devices or additional sealing means.

This object and advantage of the connection according to the invention are achieved by a method, the new and characteristic features of which will be disclosed in detail in the following description and patent claims, and furthermore illustrated by the accompanying drawings, Figs. 1-7, where

Fig. 1    shows two tubes with identical diameter (inner members) connected together by an outer member by means of two ring shaped grooves on each side of the butted ends of the inner tubes,

Fig. 2    shows in a cross-sectional view taken along line I-I in Fig. 1 connection between two tubular members,

Fig. 3    shows schematically a modified tool as used for this connection process,

Fig. 4    illustrates on an enlarged scale the principle for forming of discrete, ring shaped grooves in the outer member,

Fig. 5    is a cross-sectional view of the connection taken along line I-I in Fig. 4,

Fig. 6    show connection between two tubes of identical diameter, where the end of one tube is expanded to a larger diameter in the connection zone and in this way forms the outer member which is exposed to a shearing radial deformation on two locations in the connection zone, and

Fig. 7    shows connection in a cross-sectional view taken along line I-I in Fig. 6.

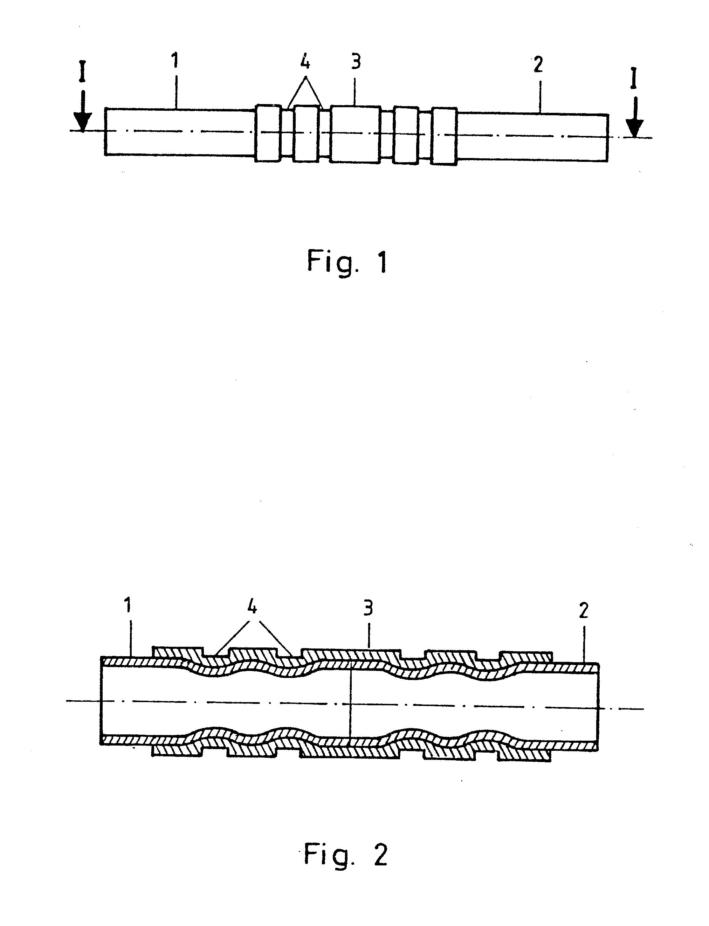

In Figure 1 two tubes (1,2) of identical diameter are shown connected together using the method according to the present invention by means of an outer tube (3). The ends of the inner tubes are butted in the outer tube forming a connection zone, which has consequently been exposed to a radial, shearing deformation on one or several locations around the whole periphery. The deformation, which is conducted by appropriate rolling tools, results in formation of discrete, ring shaped grooves (4) sheared into the outer tube's wall, which is forced (pressed) down to the inner tubes causing a plastic deformation of these tubes and finally a firm engagement between the tubes.

This special and new type of connection is more clearly illustrated in Fig. 2, which shows the connection in a cross-section taken along line I-I in Fig. 1. Two discrete ring shaped grooves (4) sheared into the outer pipe (3) on each side of the butted ends of the inserted inner tubes (1,2) ensure a firm and lasting engagement with the underlying inner tubes.

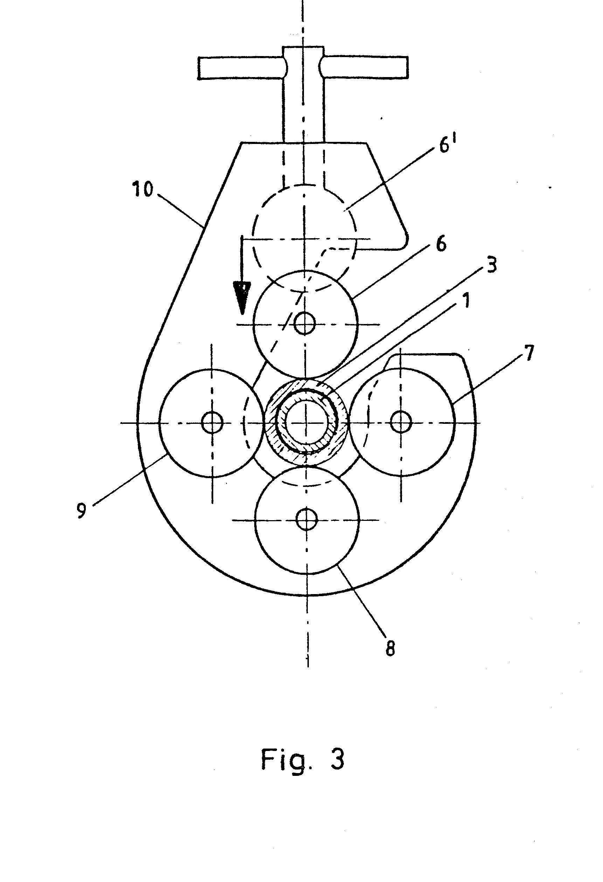

Fig. 3 shows schematically a modified tool suitable for the connection process according to the present invention, comprising four independently rotating rollers (6,7,8,9) encapsulated in a housing (10). Three of the rollers (7,8,9) are fixed positioned in the housing and displaced $90^{\circ}$ with regard to each other around the inserted assembled tubes (1,3). The dimensions and displacement of the rollers in relation to the inserted tubes ensure a uniform support of the outer tube (3) under the whole deformation process. The fourth of the supporting rollers (6) is movable from a start position (6'), which allows the assembled tubes (1,3) to be inserted into the housing (10), to an operative position (6) when after engaging with the surface of the outer tube (3) and under load functions as a deformation shearing tool.

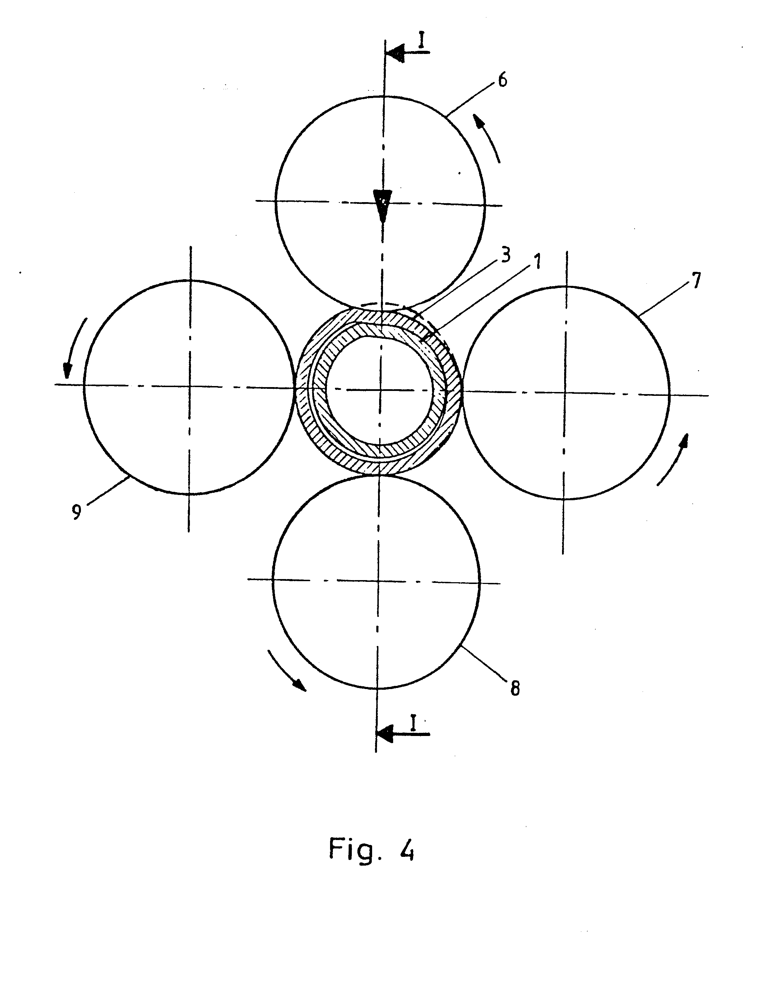

The principle for forming of discrete, ring shaped grooves in the outer tube (3) is illustrated on an enlarged scale in Fig. 4. After lowering of the shearing roller (6) under load into a firm engagement with the surface of the outer tube (3) the whole assembly of the rollers (6,7,8,9) starts rotating around the longitudinal axis of the tubes (1,3) as indicated by the arrows in Figure 4. Simultaneously the shearing roller (6) under a load adapted to penetrate the outer tube to a certain predeterminated depth develops locally a shearing deformation of the outer tube (3) followed by a plastic deformation of the underlying part of the inner tube (1). Under the successive rotation of the whole assembly of the rollers (6,7,8,9) a uniform discrete ring shaped groove is formed in the outer tube around the whole of its periphery.

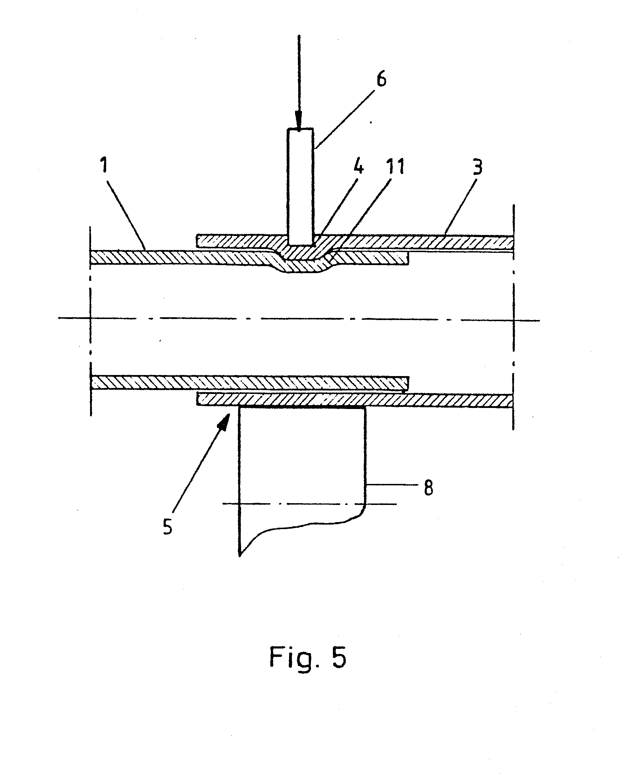

The radial depth of the groove (4) is preferably more than half of the tube wall thickness and the width approximately equal to the wall thickness as illustrated in Fig. 5 which shows in a cross-sectional view taken along line I-I in Fig. 4 the just formed connection. A connection zone (5), formed by inserting the inner tube (2) into the end of the outer tube (3) having an inner diameter slightly larger than the outer diameter of the inner tube, is supported around its whole periphery by means of rollers (only one roller (8) shown in this particular cross-sectional view). The shearing deformation roller (6) is shown in this special embodiment as a narrow disc having a width corresponding to the width of the groove (4). Other embodiments of the roller (8) can be applied within the scope of the present invention, e.g. where the shown narrow disc represents a protrusion from a broader roller serving at the same time as a complementary supporting roller in the assembly.

The result of the connection according to the invention is achievement of a resilient, radial pressure (force) between the inner and the outer tube of such a magnitude that a reliable connection is fulfilled without the necessity of using
any special lock rings or supplementary ensuring of the reliable connection by glue etc.

The resilience of the outer tube is lower than the one exercised by the inner tube because of the difference in grade of
deformation between these tubes (shearing deformation contra
pure plastic deformation). In this way a material tension
which arises between these two tube walls ensures a leakproof
connection. No problems with the spring-back effect have been
experienced.

By connection realized by several of the ring shaped grooves,
e.g. three or more, an extra high degree of connection tightness is achieved when the two outer grooves on each side of
the butted pipe ends are formed first, followed by subsequent
rolling formation of the middle groove(s). During the
formation of the last groove(s) the outer tube (muff) slides
in the longitudinal direction, and this movement results in
an increased material tension which gives an additional
tightness of the connection.

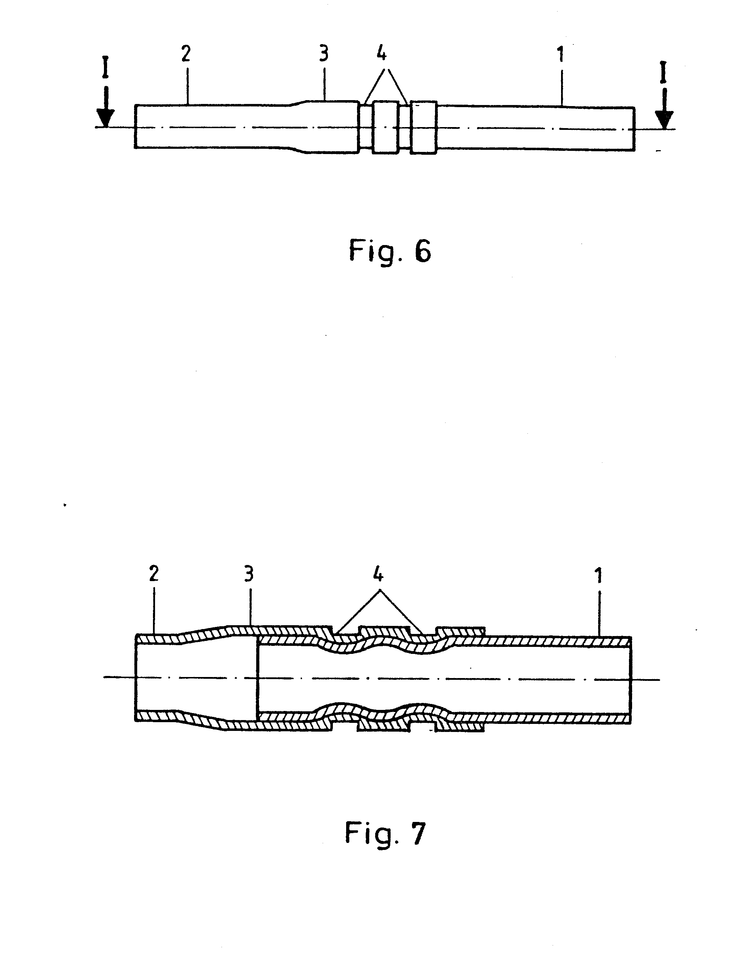

Fig. 6 shows connection between two tubes of identical diameter where the end of one of the tubes is expanded to larger
diameter and forms (represents) the outer body (the muff)
which is exposed to shearing, radial deformation in the connection zone. Fig. 7 shows the connection in a cross-section
taken along line I-I in Fig. 6.

The actual operating pressure which will be applied on the
connection determinates the the necessity of choosing a
separate outer tube as a muff or the alternative expansion of
the end part on one of the connected tubes. Another parameter
or factor to be variated is the material choice for the outer
tube (muff). If one chooses a tube for the muff connection
with higher burst pressure than the burst pressure in the
connected tubes, then a pressure increase will contribute to

0134566

a tighter connection in accordance with the pressure grade
in the inner tubes, and a possible burst out will take place
outside the connection zone. This phenomenon has been
demonstrated during the pressure tests on connection of
aluminium tubes (10 mm diameter) withstanding a pressure
of 350 bar and where the pressure to be applied for normal
applications for these tubes is calculated to be approx.
20 bar.

The connection method according to the present invention is
not limited to the above described examples and the accompanying drawings. The number of applied supporting rollers
can variate as well as the number of shearing rollers, two or
even more grooves can be formed simultaneously on the outer
tube without departing from the scope of the invention.

Claims

1.  Method for permanent connection of tubular members,
    where an inner member (1) is positioned in the end
    of an outer member (3),
    c h a r a c t e r i z e d   i n   t h a t
    the method is comprising the steps of providing a
    connection zone (5) by inserting the inner member (1)
    into the end of the outer member (3) having an inner
    diameter larger than the outer diameter of the inner
    member,
    providing means for supporting the connection zone
    substantially around its whole periphery, and
    stepwise exposing the outer member (3) within the
    connection zone (5) to a radial, shearing local deformation under successive formation of discrete,
    ring shaped grooves (4) with bottom part protruding
    down to the inner member wall (11) and resulting in a
    firm engagement between the two tubular members (1,3).

2.  Method for permanent connection according to claim 1,
    c h a r a c t e r i z e d   i n   t h a t
    the supporting means are independent rotating rollers
    (6,7,8,9) and where one or more of the rollers simultaneously acts as shearing tool (6).

3.  Method for connection according to claim 2,
    c h a r a c t e r i z e d   i n   t h a t
    the tubular members are aluminium tubes.

4.  Method for connection according to claim 2,
    c h a r a c t e r i z e d   i n   t h a t
    the tubular members are copper tubes.

Fig. 1

Fig. 2

Fig. 3

Fig. 4

Fig. 5

0134566

Fig. 6

Fig. 7